# FASCICULE DE BREVET EUROPEEN

(11) **EP 1 801 943 B1**
(45) Date de publication et mention de la délivrance du brevet: **07.05.2014**
(21) Numéro de dépôt: 06291893.3
(22) Date de dépôt: 08.12.2006
(51) Int. Cl.: H02G 3/04, H02G 9/10, E02D 29/14, H02G 9/04, H02G 9/08, E06B 5/16

(54) **Equipement de voirie coupe-feu**
Brandschutzeinrichtung für das Straßennetz
Firebreak road system equipment

(30) Priorité: 22.12.2005 FR 0553999
(43) Date de publication de la demande: 27.06.2007
(73) Titulaire: EJ EMEA, 60149 Saint-Crépin-Ibouvillers (FR)
(72) Inventeur: Fumalle, Christian, 95430 Butry (FR)
(74) Mandataire: Thinat, Michel

(56) Documents cités:
- CH-A- 404 565
- CH-A5- 670 467
- CN-Y- 2 701 916
- DE-A1- 2 537 257
- DE-A1- 19 647 241
- DE-U1- 8 219 766
- DE-U1- 9 409 251
- DE-U1- 29 608 961
- GB-A- 535 177
- GB-A- 2 398 593
- JP-A- 5 112 957
- JP-A- 6 146 316
- JP-A- 6 146 317
- JP-A- 2001 170 195
- JP-A- 2003 119 812
- JP-A- 2004 011 326
- US-A- 5 649 399
- US-A- 5 860 268

## Description

La présente invention concerne un équipement de voirie coupe-feu, comprenant au moins un couvercle ou tampon pouvant être amoviblement disposé dans un cadre destiné à être fixé au sol afin de fermer une galerie ou une chambre souterraine technique devant être protégée contre des incendies. Un équipement conforme au préambule de la revendication 1 est connu de JP-6146316-A.

L'invention s'applique à ce genre d'équipement de voirie installé par exemple dans des tunnels de circulation routière ou ferroviaire et soumis à des normes de sécurité drastiques telles que le matériel technique logé dans les chambres souterraines fermées par l'équipement de voirie doit être efficacement protégé par cet équipement pendant une période déterminée en cas d'incendie dans le tunnel.

On connaît un équipement de voirie permettant de protéger le matériel technique logé dans la chambre souterraine fermée par les couvercles ou tampons de cet équipement, et consistant à prévoir un ou plusieurs couvercles comportant un matériau thermiquement isolant disposé en dessous de chacun des couvercles ou tampons disposés dans le cadre de support scellé au sol.

Cette disposition connue a pour inconvénient d'être d'une structure très complexe, par conséquent coûteuse, et d'installation difficile puisqu'il faut disposer les sous-couvercles dans la chambre technique avant de fermer cette dernière par les couvercles ou tampons externes. En outre, l'accès au matériel technique logé dans la chambre n'est pas aisé puisqu'il faut tout d'abord retirer les couvercles ou tampons externes pour accéder ensuite aux sous- couvercles et les retirer ensuite de la chambre.

La présente invention a pour but d'éliminer les inconvénients ci-dessus de l'équipement de voirie connu de résistance au feu.

A cet effet, l'invention propose un équipement de voirie coupe-feu selon la revendication 1.

L'équipement comprend au moins un deuxième couvercle pouvant être disposé en appui dans le cadre en alignement et dans le même plan que le premier couvercle et un deuxième carter rempli d'un matériau réfractaire thermiquement isolant est amoviblement fixé sous le deuxième couvercle.

Chaque couvercle est en forme de cuvette renversée remplie d'un matériau réfractaire thermiquement isolant et dont la paroi supérieure externe est pourvue de passages traversants également remplis du matériau réfractaire en affleurement avec la face externe de la paroi du couvercle.

La paroi supérieure externe de chaque cuvette du couvercle est entourée d'une rigole délimitée par des parois externes dressées du couvercle parallèles à des parois latérales ajourées de la cuvette en regard de celles-ci, le matériau réfractaire remplissant la rigole périphérique au travers des ajours des parois latérales de la cuvette.

Les parois externes de chaque couvercle et la paroi de fond de la rigole périphérique constituant l'assise du couvercle peuvent venir en appui par leurs faces externes respectivement sur les faces internes des parois latérales du cadre délimitant son ouverture et un rebord périphérique interne solidaire des parois latérales de ce cadre.

Chaque couvercle comprend des parois périphériques inférieures s'étendant sous la paroi de fond de la rigole périphérique pour délimiter la cuvette renversée du couvercle, ces parois périphériques inférieures étant espacées des parois latérales du cadre lorsque le couvercle est disposé en appui dans le cadre.

De préférence, chaque carter ou fond en forme de boîte contenant le matériau réfractaire thermiquement isolant est amoviblement fixé sous le couvercle correspondant de manière que les bords d'extrémités des parois inférieures de la cuvette soient en appui sur le matériau réfractaire du carter et les parties supérieures libres des parois du carter entourent de façon espacée les parois inférieures de la cuvette lorsque le couvercle est disposé dans son cadre.

Plusieurs tiges filetées sont ancrées par leurs têtes respectives à la paroi du couvercle correspondant perpendiculairement sous celle-ci en regard respectivement de passages traversants de la paroi du couvercle de manière que les têtes de ces tiges filetées soient noyées dans le matériau réfractaire remplissant ces passages et les tiges filetées soient partiellement noyées dans le matériau réfractaire remplissant la cuvette du couvercle en faisant saillie extérieurement de ce matériau à l'opposé de la paroi du couvercle, le carter étant fixé sous le couvercle par les tiges filetées traversant le matériau réfractaire du carter et la paroi inférieure formant fond du carter et par des écrous vissés aux tiges filetées sur la paroi de fond du carter.

La tête de chaque tige filetée est ancrée dans un plot solidaire de la face interne de la paroi du couvercle en regard du passage traversant correspondant de cette paroi.

Le deuxième couvercle présente une structure à cuvette renversée remplie de matériau réfractaire thermiquement isolant sensiblement identique à celle du premier couvercle, la paroi supérieure externe du deuxième couvercle ayant l'un de ses bords, non bordé d'une rigole, pouvant être apposé directement en appui sur la paroi externe dressée correspondante du premier couvercle lorsque les deux couvercles sont disposés dans le cadre et le deuxième couvercle comprend, sous le bord de sa paroi supérieure en appui sur la paroi externe du premier couvercle, un barreau disposé avec jeu en dessous de la paroi de fond correspondante de la rigole du premier couvercle en étant en regard de façon espacée de la paroi inférieure correspondante de la cuvette du premier couvercle.

Selon un autre mode de réalisation, chaque couvercle est en forme de cuvette remplie d'un matériau réfractaire thermiquement isolant et comporte un rebord périphérique constituant l'assise du couvercle et délimitant la cuvette du couvercle en deux parties supérieure et inférieure respectivement de plus grande et de plus petite sections et en ce que le couvercle vient en appui par son rebord périphérique sur un rebord périphérique interne solidaire des parois latérales du cadre de manière que les parois latérales de la partie supérieure de la cuvette soient en appui sur les faces internes des parois latérales du cadre et que les parois latérales de la partie inférieure de la cuvette soient espacées des parois latérales du cadre.

Chaque carter contenant le matériau réfractaire thermiquement isolant est amoviblement fixé sous le couvercle correspondant de cet autre mode de réalisation de manière que la paroi de fond de la cuvette soit en appui sur le matériau réfractaire du carter et les parties supérieures libres des parois du carter entourent de façon espacée la partie inférieure de la cuvette lorsque le couvercle est disposé dans son cadre.

Plusieurs tiges filetées à têtes traversent la paroi de fond de la cuvette en faisant saillie perpendiculairement sous cette paroi, les têtes de ces tiges étant en appui sur la face interne de la paroi de fond de la cuvette et noyées dans le matériau réfractaire remplissant la cuvette et le carter est fixé sous le couvercle par les tiges filetées traversant le matériau réfractaire du carter et la paroi de fond du carter et par des écrous vissés aux tiges filetées sur la paroi de fond du carter.

Le deuxième couvercle de cet autre mode de réalisation a l'une de ses parois latérales, ne comportant pas de partie de rebord périphérique, ayant sa partie supérieure pouvant être apposée directement en appui sur la partie supérieure de la paroi correspondante du premier couvercle lorsque les deux couvercles sont disposés dans le cadre et le deuxième couvercle comprend, solidaire de sa paroi latérale, un barreau disposé avec jeu en dessous du rebord correspondant de la paroi d'appui du premier couvercle en étant en regard de façon espacée de la partie inférieure de cette paroi d'appui.

Avantageusement, un joint expansible à la chaleur est interposé entre le barreau du deuxième couvercle et la paroi de fond de la rigole du premier couvercle ou le rebord du premier couvercle.

Le carter à matériau réfractaire fixé sous le deuxième couvercle de façon identique au carter du premier couvercle s'étend dans le même plan que le carter du premier couvercle et a l'une de ses parois latérales en regard de façon espacée de la paroi latérale correspondante du carter du premier couvercle lorsque ces couvercles sont disposés dans le cadre.

Une partie formant joint à matériau réfractaire thermiquement isolant est fixée à au moins l'une des parois de fond des carters des deux couvercles de manière à recouvrir l'espace entre les deux parois latérales en vis-à-vis des deux carters au droit de cet espace.

Avantageusement, la partie formant joint est constituée par un boîtier parallélépipédique plat recouvrant les deux parois de fond des carters des deux couvercles perpendiculairement au plan de l'espace précité et contenant le matériau réfractaire pouvant être constitué par du béton réfractaire ou une ou plusieurs plaques superposées thermiquement isolantes incombustibles à base de silicate de calcium et d'alumine.

Les parois latérales de chaque carter de couvercle sont espacées des parois latérales en vis-à-vis du cadre et la paroi de fond de chaque carter de couvercle surplombe un rebord périphérique inférieur des parois latérales du cadre, un joint périphérique expansible à la chaleur étant interposé entre ce rebord et la paroi de fond du carter.

Avantageusement, le cadre présente une structure modulaire de longerons et de traverses pouvant être amoviblement assemblés les uns aux autres pour recevoir plusieurs couvercles juxtaposés.

Les parois latérales du cadre sont ajourées et un matériau réfractaire thermiquement isolant remplit les ajours de ces parois avant de noyer le cadre dans le sol.

Le matériau réfractaire remplissant la cuvette de chaque couvercle est, par exemple, du béton coulé dans la cuvette en au moins deux couches pouvant présenter des caractéristiques de résistances à la chaleur et mécanique différentes d'une couche à l'autre et le matériau remplissant les ajours des longerons et traverses du cadre est également du béton coulé dans ces ajours.

Le matériau remplissant chaque carter de couvercle est constitué par du béton ou une ou plusieurs plaques superposées incombustibles thermiquement isolantes à base de silicate de calcium et d'alumine.

Les passages traversants sont en forme de trous oblongs répartis sur la majeure partie de la surface de la paroi supérieure de chaque couvercle.

Chaque couvercle est de forme rectangulaire.

Chaque carter peut être remplacé par un autre carter d'une hauteur différente du précédent et amoviblement fixé sous le couvercle correspondant e étant rempli d'un matériau réfractaire thermiquement isolant.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels:
- la figure 1 est une demi vue inférieure en coupe transversale d'un tunnel ferroviaire comportant plusieurs équipements de voirie conformes à l'invention;
- la figure 2 est une vue de dessus en perspective de l'équipement de voirie de l'invention à deux couvercles disposés dans un cadre et remplis de béton;
- la figure 3 est une vue en perspective semblable à celle de la figure 2 avec l'un des couvercles retirés du cadre et l'autre couvercle vide;
- la figure 4 est une vue en perspective d'un ensemble modulaire à longerons et traverses du cadre de l'équipement de voirie de l'invention;
- la figure 5 est une vue en perspective de dessous de l'un des couvercles de l'équipement des figures 2 et 3;
- la figure 6 est une vue agrandie de la partie cerclée en VI de la figure 5;
- la figure 7 est une vue du couvercle de la figure 5 rempli d'un matériau réfractaire;
- la figure 8 est une vue en perspective de l'un des couvercles de la figure 2 ;
- la figure 9 est une vue partielle en perspective de dessous de la jonction entre les deux couvercles adjacents de la figure 2;
- la figure 10 est une vue en coupe agrandie suivant la ligne X-X de la figure 2;
- la figure 11 est une vue en perspective d'un carter fixé sous l'un des couvercles de l'équipement de voirie de la figure 2;
- la figure 12 est une vue en coupe suivant la ligne XII-XII de la figure 2; et
- la figure 13 est une vue en coupe suivant la ligne XIII-XIII de la figure 2 ;
- la figure 14 est une vue de dessus en perspective d'un équipement de voirie suivant un second mode de réalisation et comportant deux couvercles disposés dans un cadre ;
- la figure 15 est une vue en perspective semblable à celle de la figure 14 avec l'un des couvercles retiré du cadre et l'autre couvercle vide ;
- la figure 16 est une vue de dessous d'un couvercle rempli de béton de ce second mode de réalisation ;
- la figure 17 est une vue de dessus d'un couvercle du second mode de réalisation non rempli de béton ;
- la figure 18 est une vue en coupe suivant la ligne XVIII-XVIII de la figure 14 ;
- la figure 19 est une vue agrandie de la partie cerclée en XIX de la figure 18 ;
- la figure 20 est une vue en coupe agrandie suivant la ligne XX-XX de la figure 14 ; et
- la figure 21 est une vue agrandie en coupe suivant la ligne XXI-XXI de la figure 14.

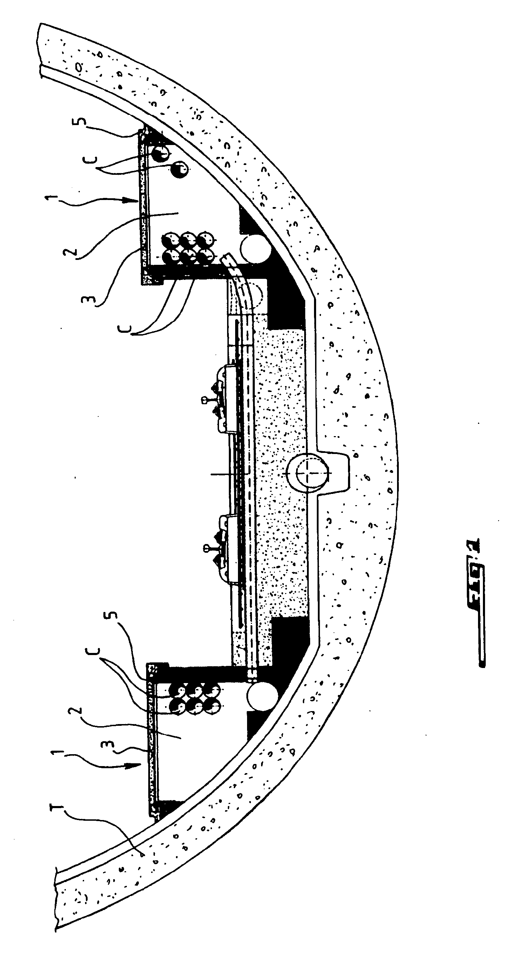

La figure 1 représente deux équipements de voirie 1 de l'invention pouvant être installés dans un tunnel ferroviaire T pour fermer une chambre ou galerie technique 2 dans laquelle sont logées des installations techniques, telles que par exemple des câbles électriques C.

Chaque équipement de voirie 1 est apte à protéger pendant une durée déterminée les installations électriques dans la galerie ou chambre technique 2 contre une élévation considérable de température externe due à un incendie se propageant dans le tunnel T.

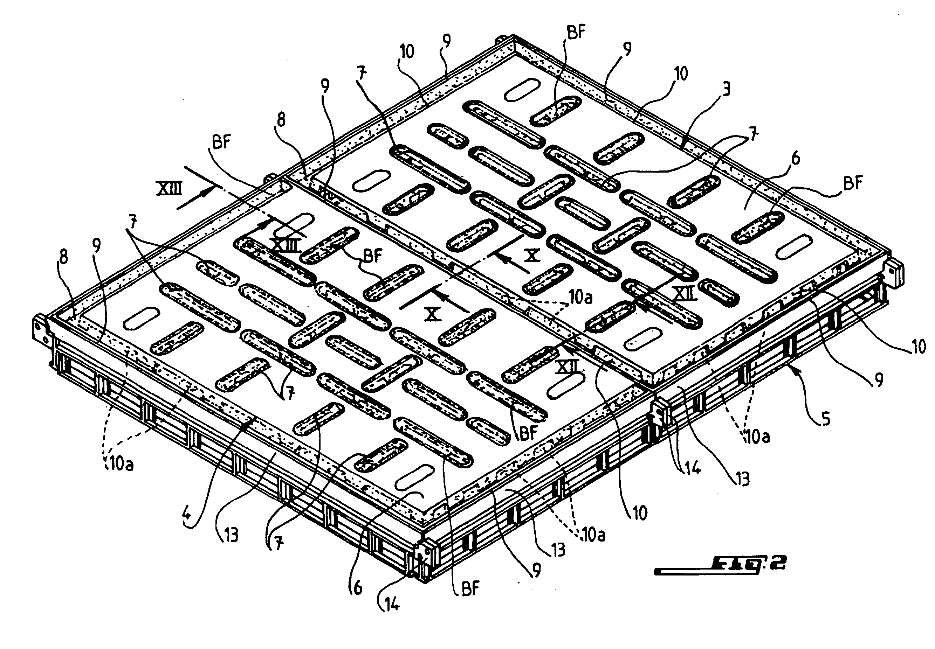

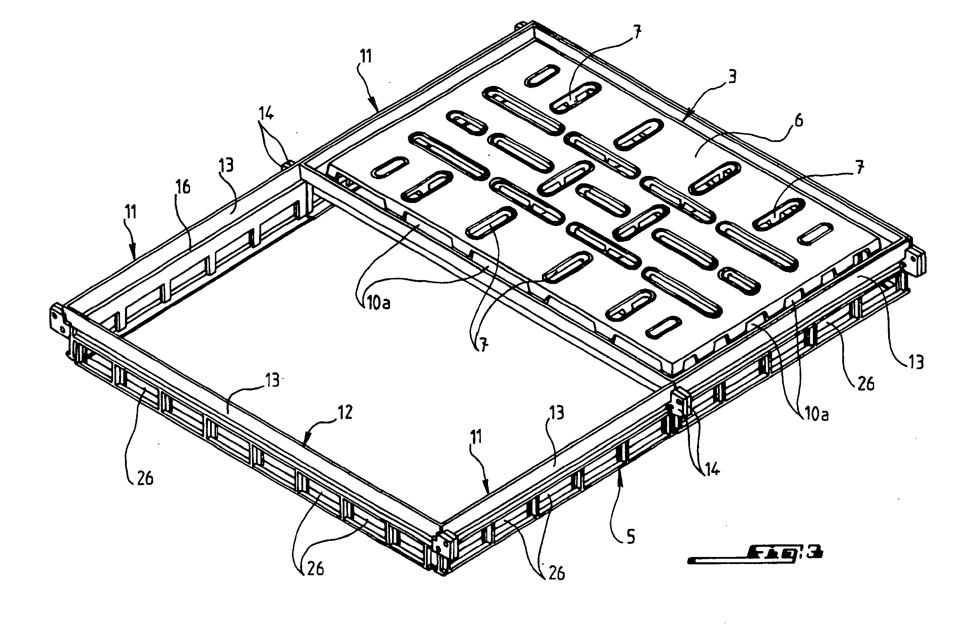

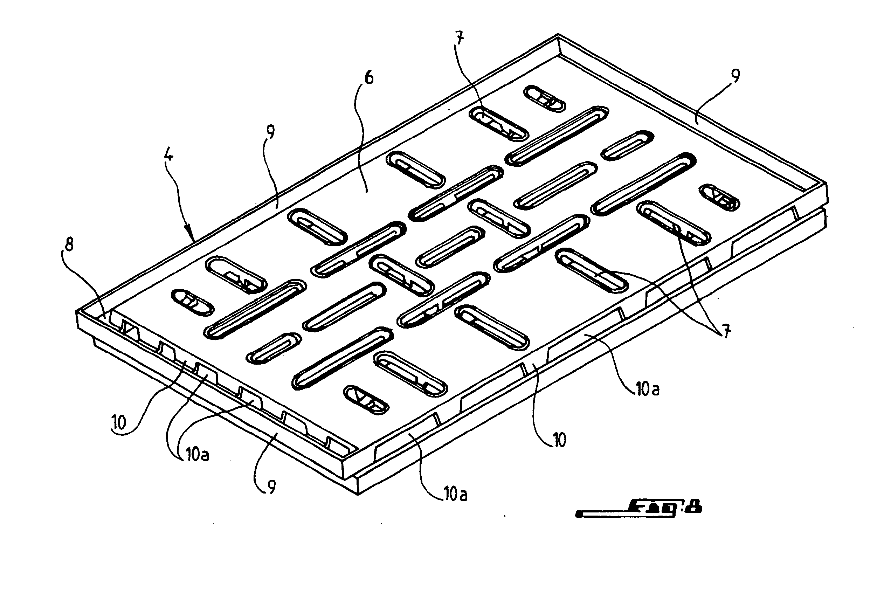

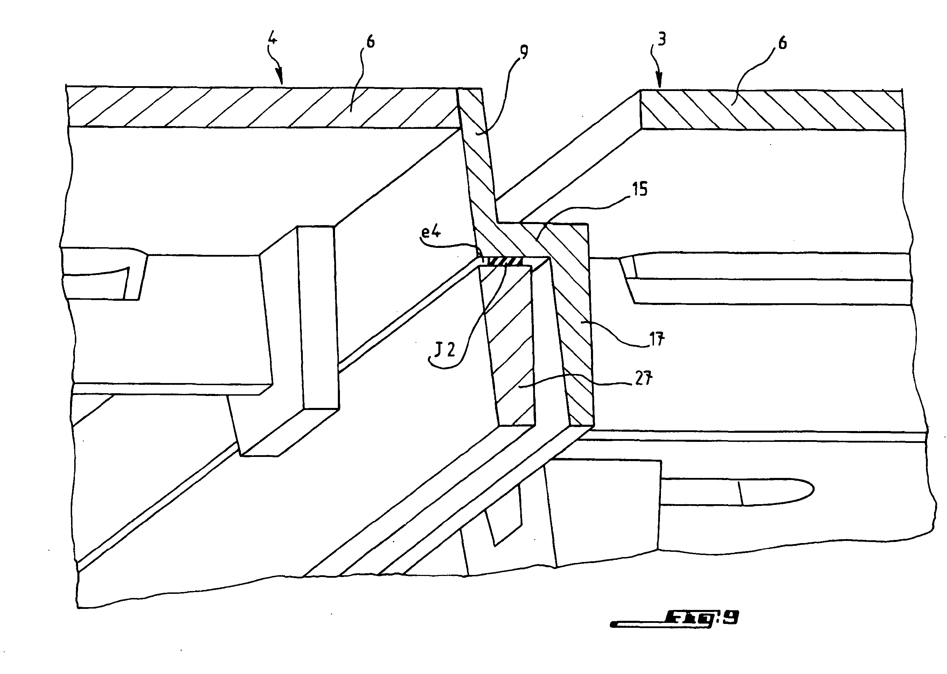

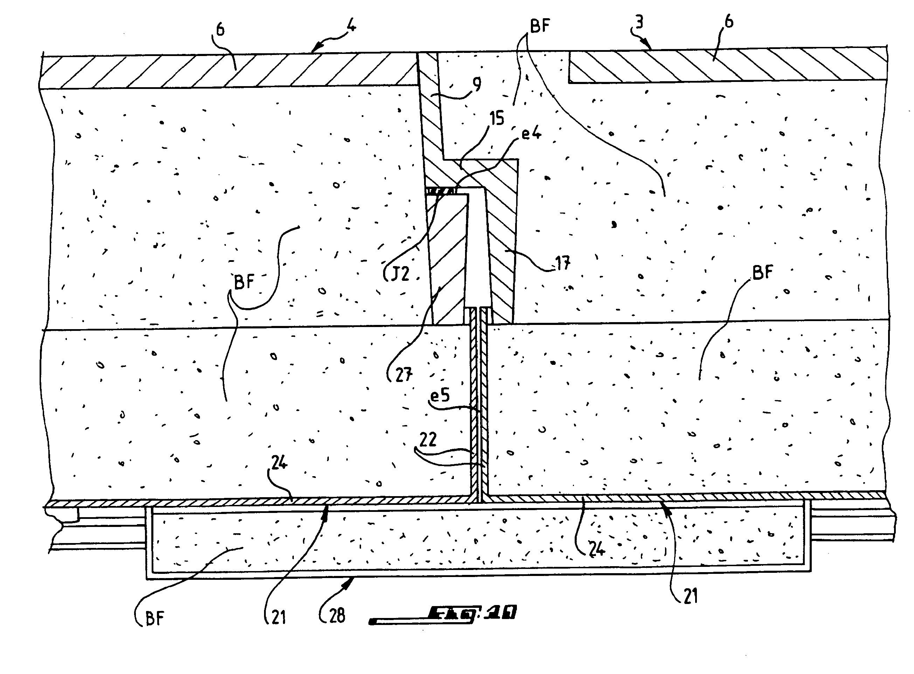

L'équipement de voirie de l'invention résistant au feu ou coupe-feu va être décrit en référence aux figures 2 à 13 dans le cas où cet équipement comprend deux couvercles ou tampons rectangulaires 3, 4 disposés amoviblement dans un cadre 5 en alignement et dans le même plan, mais il est bien entendu que cet équipement peut être du type comportant un seul couvercle ou tampon circulaire, triangulaire ou rectangulaire pouvant être logé dans un cadre ou plusieurs tampons rectangulaires, ou triangulaire logés dans le cadre correspondant.

Le couvercle ou tampon 3 se présente sous la forme générale d'une cuvette renversée dont la paroi plane supérieure externe 6 est pourvue d'un grand nombre de passages traversants 7, de préférence en forme de trous oblongs, occupant la majeure partie de la surface de la paroi rectangulaire 6 du couvercle 3.

La paroi supérieure 6 du couvercle 3 est entourée complètement par une rigole 8 délimitée par des parois externes dressées 9 du couvercle 3 parallèles aux parois ajourées 10 de la cuvette de ce couvercle.

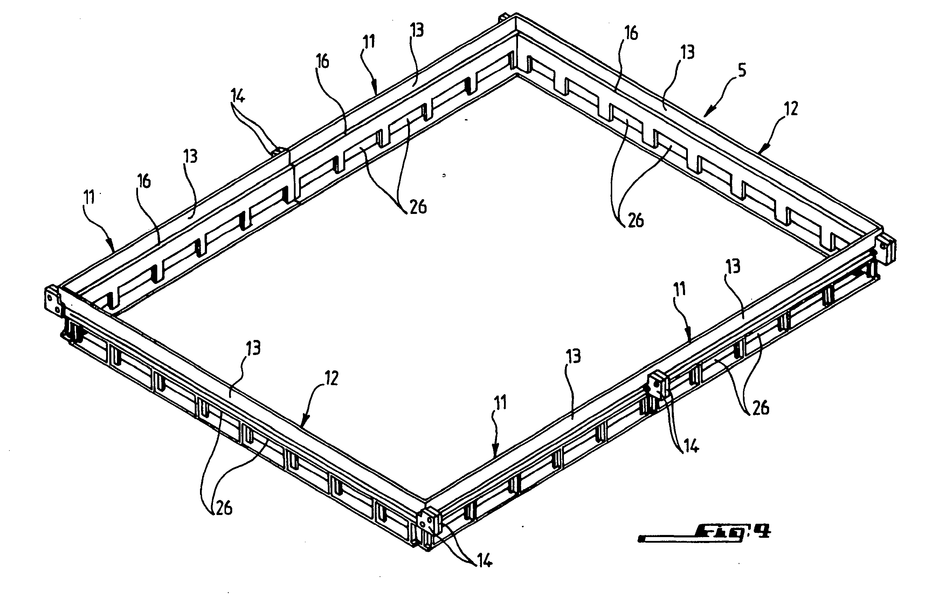

Le cadre 5 est constitué d'un ensemble modulaire à longerons 11 et traverses 12 pouvant être assemblés les uns aux autres pour définir les quatre parois latérales périphériques 13 du cadre rectangulaire 5. Comme cela ressort mieux de la figure 4, deux longerons 11 d'un même côté sont assemblés bout-à-bout par deux oreilles planes externes 14 s'étendant perpendiculairement aux longerons correspondants et maintenues jointivement juxtaposées par au moins un boulon, non représenté, traversant ses oreilles. Cette figure montre également que chaque traverse 12 est fixée à chaque extrémité d'un longeron par deux oreilles planes 14 solidaires respectivement au longeron correspondant 11 perpendiculairement à celui-ci et à l'extrémité de la traverse 12 dans son prolongement de manière que les deux oreilles 14 puissent être fixées l'une à l'autre en étant jointivement juxtaposées par au moins un boulon traversant, non représenté. Ainsi, cette structure modulaire permet d'assembler en prolongement les uns des autres d'autres longerons 11 à l'aide d'oreilles externes 14 suivant le nombre de couvercles que l'on souhaite disposer dans le cadre 5.

Les parois externes 9 du couvercle 3 et la paroi de fond 15 de la rigole périphérique 8 constituant l'assise de ce couvercle, ont leurs faces externes venant en appui respectivement sur les faces internes des parois latérales 13 du cadre 5 et un rebord périphérique interne 16 venant de matière avec les parois 13 du cadre 5.

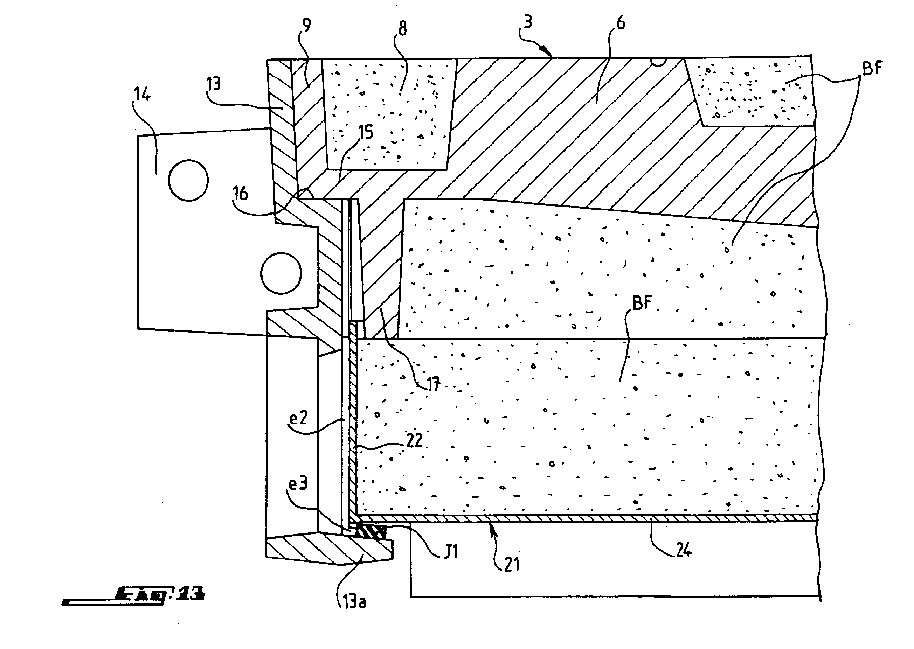

Le couvercle 3 comprend quatre parois périphériques inférieures 17 s'étendant sous la paroi de fond 15 de la rigole périphérique 8 pour délimiter la cuvette renversée du couvercle 3. Comme cela ressort notamment de la figure 13, les parois périphériques inférieures 17 sont espacées des parties de parois latérales 13 du cadre 5 situées en dessous de la paroi de fond 15 de la rigole 8.

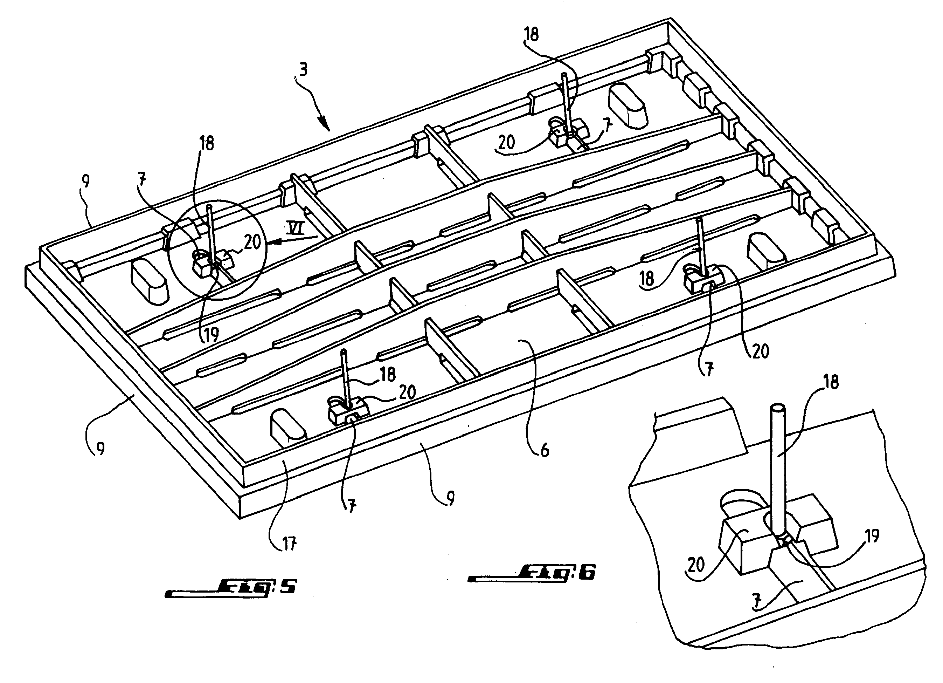

La cuvette du couvercle 3 est totalement remplie d'un matériau réfractaire thermiquement isolant de préférence constitué par du béton coulé BF dans la cuvette du couvercle 3 occupant sa position renversée représentée en figure 5 de manière que le béton non seulement remplisse cette cuvette, mais également les passages traversants 7 de la paroi supérieure 6 du couvercle 3 en venant en affleurement avec la face externe de cette paroi ainsi que la rigole périphérique 8 en passant au travers d'ajours 10a des parois latérales 10 de la cuvette du couvercle 3. Ce remplissage en matériau réfractaire permet de diminuer considérablement les ponts thermiques entre le couvercle 3 et la chambre technique 2. Seuls les quatre passages 7 situés aux quatre coins du couvercle 3 ne sont pas remplis de béton et servent à l'introduction d'un outil de soulèvement du couvercle 3 lors d'une intervention dans la chambre technique.

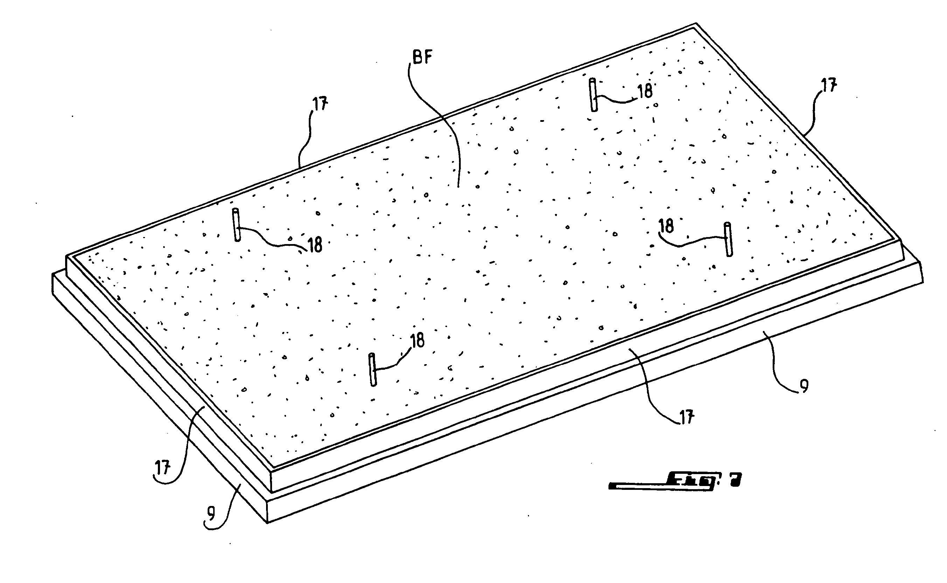

La figure 7 montre le béton réfractaire BF remplissant complètement la cuvette du couvercle 3 de la figure 5 de manière que le béton soit en affleurement avec les bords périphériques des parois inférieures 17 de ce couvercle.

De préférence, deux couches de béton réfractaire sont successivement coulées dans le couvercle 3, ces deux couches pouvant avoir des caractéristiques de résistances au feu et mécanique différentes d'une couche à l'autre. Ainsi, la première couche de béton réfractaire coulée sur la face inférieure de la plaque 6 du couvercle 3 peut avoir une résistance mécanique plus élevée que la deuxième couche sous-jacente et une résistance et/ou une isolation thermique au feu moins élevées que celles de cette deuxième couche.

Avant de couler le béton réfractaire dans le couvercle renversé 3, un certain nombre de tiges filetées 18, dans le cas présent au nombre de quatre, sont ancrées par leurs têtes respectives 19 dans des plots 20 de manière que les têtes 19 soient en regard respectivement de certains des passages traversants 7 avec les tiges faisant saillie de la face inférieure de la paroi 10 du couvercle 3 perpendiculairement à cette face. En coulant le béton dans le couvercle renversé 3, celui-ci s'introduit en particulier dans les passages traversants 7 en regard des têtes de vis 19 pour les noyer dans le béton et ainsi couper tout pont thermique susceptible d'être créé par les tiges filetées 18. Une fois la cuvette renversée 3 complètement remplie de béton réfractaire BF, les parties d'extrémité des tiges filetées 18 font saillie de la couche de béton à l'opposé de la paroi 6 du couvercle 3.

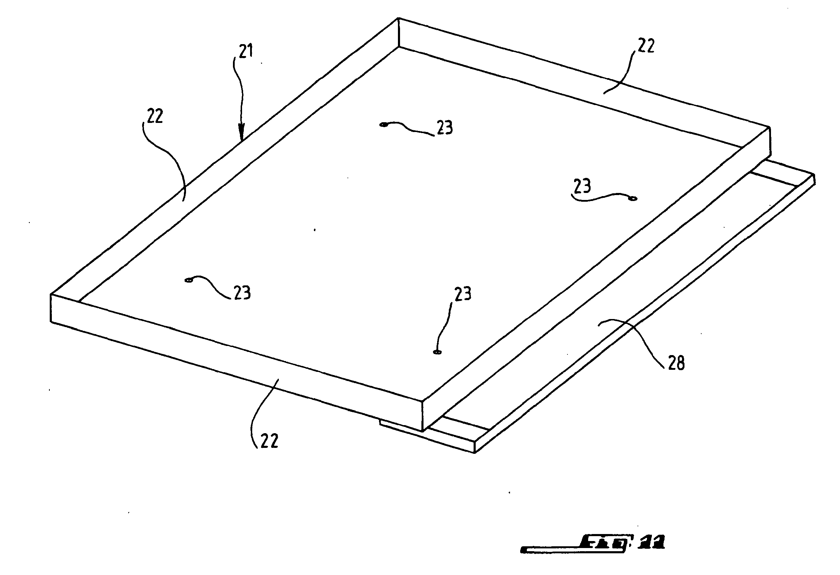

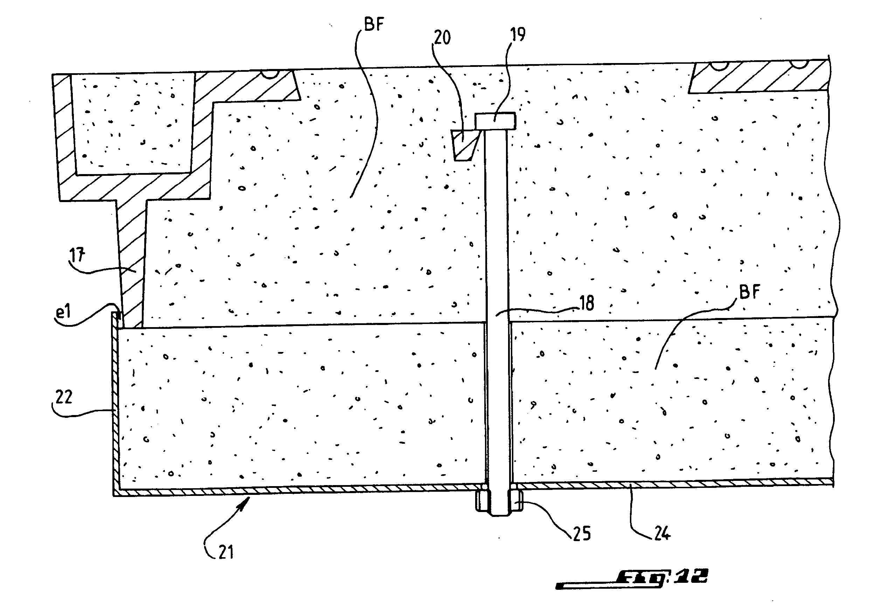

Un carter 21 en forme de boîte à section rectangulaire mieux visible en figure 11 et contenant un matériau réfractaire thermiquement isolant est fixé sous le couvercle 3 de manière que les bords d'extrémités des parois inférieures 17 de la cuvette de ce couvercle soient en appui sur le matériau réfractaire du carter 21. Le matériau réfractaire ne remplit pas complètement le carter 21 de manière à laisser subsister des parties supérieures libres des parois 22 du carter qui entourent de façon espacée suivant un espace e1 les parois inférieures 17 de la cuvette du couvercle 3 lorsque le carter 21 est fixé sous ce couvercle comme cela ressort notamment de la figure 12. Le carter 21 contenant le matériau réfractaire est fixé sous le couvercle 3 par les tiges filetées 18 traversant le matériau réfractaire BF du carter et les perçages correspondants 23 réalisés dans la paroi de fond 24 du carter 21 et par des écrous 25 vissés aux extrémités libres des tiges filetées 18 en venant en appui sur la face externe de la paroi de fond 24.

Le matériau réfractaire contenu dans le carter 21 peut être constitué par du béton réfractaire BF ou également par une ou plusieurs couches des plaques incombustibles thermiquement isolantes à base de silicate de calcium et d'alumine, connues en soi.

Les parois latérales 22 du carter 21 sont disposées en regard des parties inférieures des parois latérales 13 du cadre 5 en définissant entre elles un espace e2 et la paroi de fond 24 du carter 21 surplombe un rebord périphérique inférieur 13a des parois 13 du cadre 5 s'étendant perpendiculairement à celles-ci en laissant subsister entre ce rebord et la paroi 24 un espace e3 dans lequel peut être logé un joint J1 en matériau expansible à la chaleur.

Les parois 13 des longerons 11 et traverses 12 du cadre 5 comportent des ajours en forme de fenêtres 26 qui sont remplis d'un matériau réfractaire, de préférence du béton réfractaire, avant que le cadre soit noyé dans le sol.

Le deuxième couvercle 4 de l'équipement de voirie 1 présente une structure générale à cuvette renversée remplie de matériau réfractaire sensiblement identique à la structure du premier couvercle, de sorte que les éléments du couvercle 4 identiques à ceux du couvercle 3 portent les mêmes références et ne seront pas décrits à nouveau.

La différence existant entre le couvercle 4 et le couvercle 3 porte sur le fait que la paroi supérieure 6 du couvercle 4 n'est bordée par la rigole 8 qu'à trois de ses côtés et le bord libre du quatrième côté de la paroi 6 est directement en appui sur la paroi externe dressée adjacente 9 du couvercle 3 et le couvercle 4 comporte, sous ce bord en appui sur la paroi adjacente 9 du couvercle 3, un barreau 27 étendant transversalement entre les longerons 11 du cadre 5 en s'emboîtant sous la paroi de fond 15 de la rigole 8 située en dessous de la paroi adjacente 9 du couvercle 3 en définissant un jeu e4 entre la face supérieure du barreau 27 et la face inférieure de la paroi 15 de la rigole. Un joint J2 expansible à la chaleur peut être logé dans l'espace e4. En outre, le barreau 27 est disposé en regard de façon espacée de la paroi inférieure adjacente 17 de la cuvette du couvercle 3. Cet assemblage permet de réaliser une chicane coupe-feu.

Un carter 21, identique au carter 21 du couvercle 3, est fixé sous le couvercle 4 de la même façon que le carter 21 du couvercle 3 à l'aide des ensembles à tiges filetées 18 traversant le matériau réfractaire contenu dans le carter 21 du couvercle 4 et écrous 25 vissés aux extrémités libres de ces tiges filetées.

Les deux carters 21 s'étendent dans le même plan de façon adjacente l'un à l'autre par deux de leurs parois latérales adjacentes 22 l'une à l'autre et séparées par un espace e5.

Un boîtier parallélépipédique relativement plat 28 rempli d'un matériau réfractaire thermiquement isolant, tel que par exemple du béton ou une ou plusieurs couches superposées incombustible thermiquement isolantes à base de silicate de calcium et d'alumine, est disposé en partie sur les faces externes des deux parois de fond 24 des carters adjacents 21 en recouvrant au droit de celui-ci l'espace e5 des parois adjacentes 22 des carters 21 de manière à augmenter la résistance ou l'isolation au feu de l'équipement de voirie.

De préférence, le boîtier 28 est fixé, par exemple par soudage, en partie à la paroi 24 de l'un des carters 21, par exemple celui qui est fixé sous le couvercle 4, en s'étendant perpendiculairement à la paroi 22 du carter 21 et débordant d'en-dessous de cette paroi pour venir en appui sous la paroi de fond 24 de l'autre carter 21 lorsque le couvercle 4 est disposé dans le cadre 5 en s'emboîtant sous le couvercle 3. Ainsi, le boîtier 28 s'étend perpendiculairement au plan de l'espace e5.

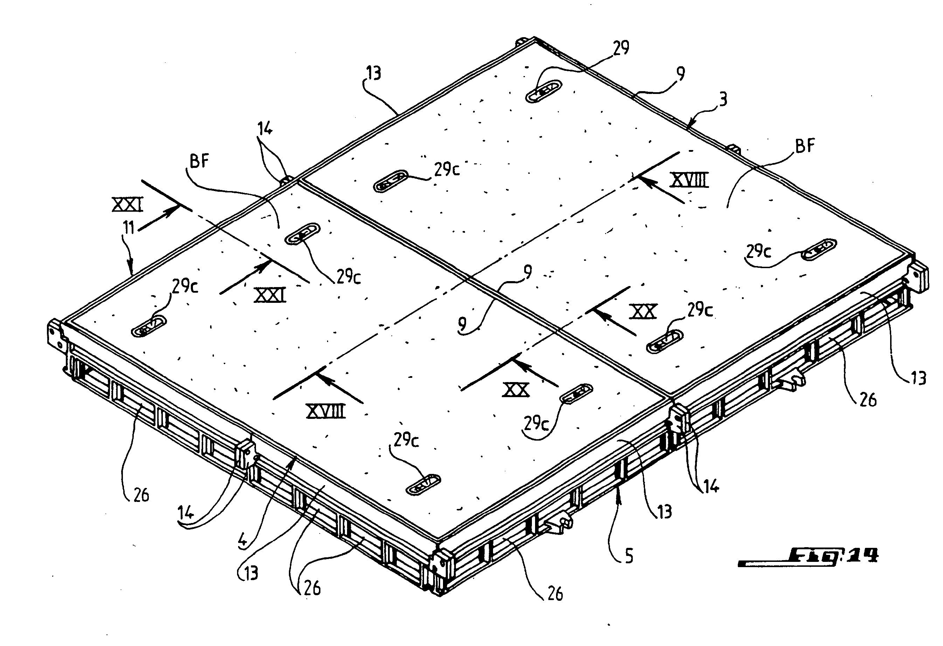

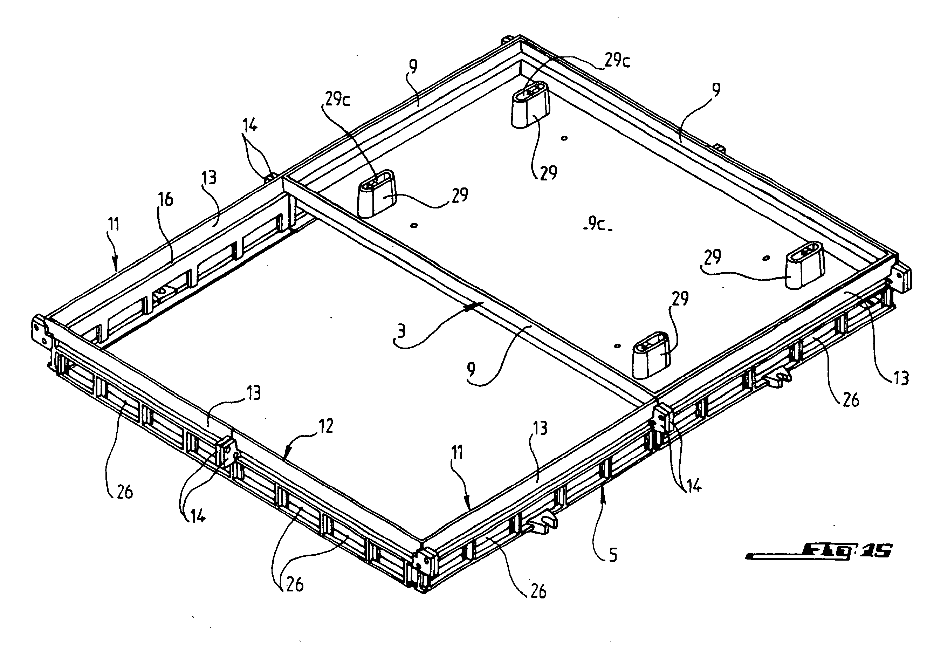

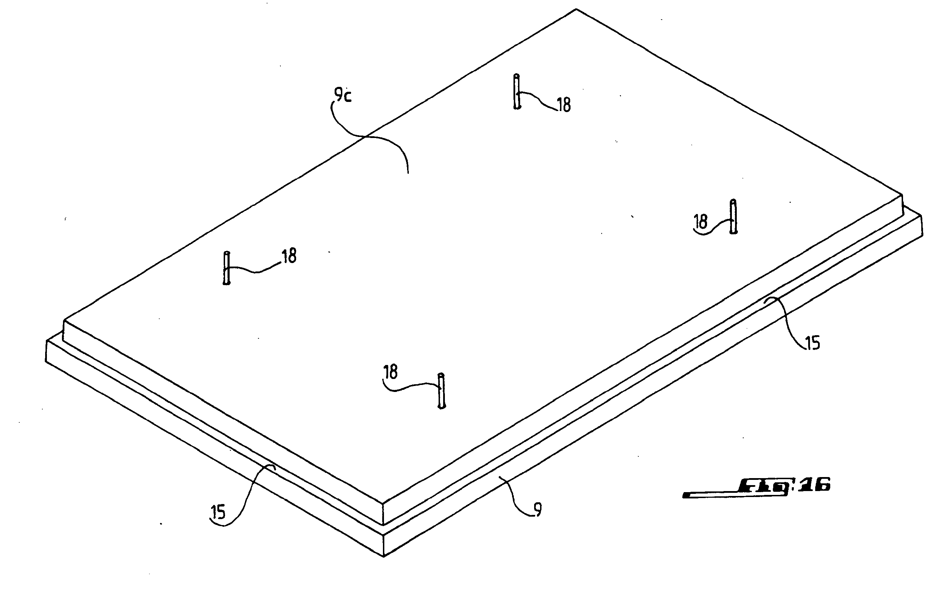

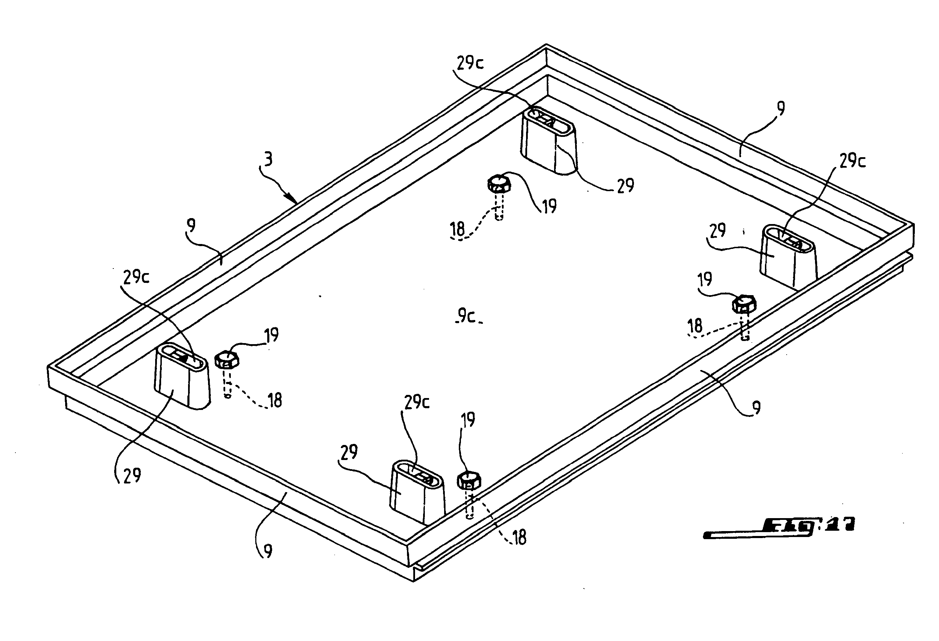

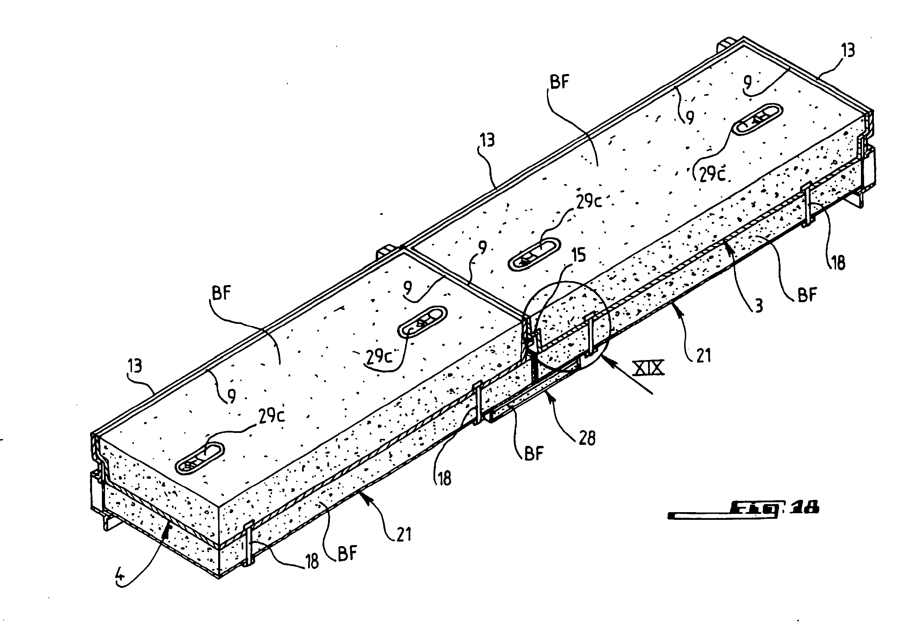

Les figures 14 à 21 représentent un autre mode de réalisation de l'équipement de voirie coupe-feu de l'invention.

Selon ce mode de réalisation, les éléments de l'équipement de voirie présentant la même structure et accomplissant les mêmes fonctions que ceux du premier mode de réalisation précédemment décrit portent les mêmes références et ne seront pas à nouveau détaillés, seuls les éléments du second mode de réalisation différents de ceux du premier mode de réalisation seront décrits ci-dessous.

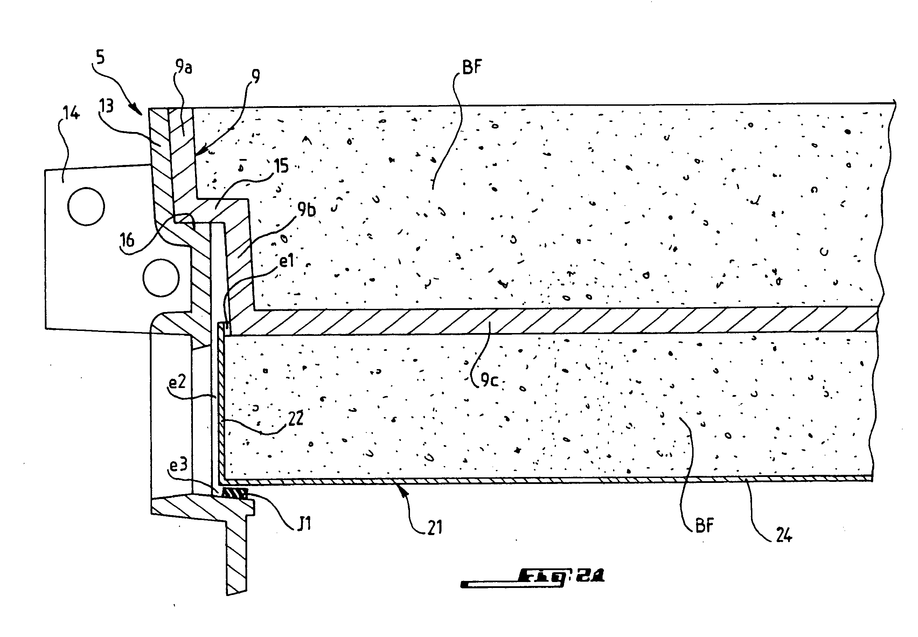

Ainsi, chacun des couvercles 3, 4 de l'équipement de voirie est constitué par une cuvette non renversée comprenant un rebord périphérique 15 constituant l'assise du couvercle et délimitant la cuvette de ce couvercle en deux parties de parois périphériques supérieure 9a et inférieure 9b respectivement de plus grande et de plus petite sections transversales, la partie inférieure 9b des parois périphériques 9 de la cuvette du couvercle 3, 4 étant raccordée à la paroi de fond 9c de la cuvette. Le couvercle 3, 4 vient en appui par son rebord périphérique 15 sur le rebord périphérique interne 16 des parois latérales 13 du cadre 5 de manière que les parois latérales 9 de la partie supérieure 9a de la cuvette soient en appui sur les faces internes des parois latérales 13 de ce cadre et que la partie inférieure 9b des parois latérales 9 de la cuvette soient espacées des parois latérales 13 du cadre 5 comme cela ressort mieux de la figure 21.

Chaque cuvette des couvercles 3, 4 est complètement remplie d'un matériau réfractaire thermiquement isolant, tel que du béton B, de manière à noyer des plots 29, par exemple, au nombre de quatre comme représenté en figure 5, faisant saillie de la face interne de la paroi de fond 9c de la cuvette et dont les extrémités supérieures comportent des trous oblongs 29c d'introduction d'un outil ou clé de soulèvement du couvercle 3, 4 de son cadre 5, le matériau réfractaire BF étant coulé dans la cuvette pour arriver en affleurement avec les extrémités des plots 29.

La paroi de fond 9c de la cuvette de chaque couvercle 3, 4 comporte des perçages, par exemple au nombre de quatre, de passage des tiges filetées 18 dont les têtes 19 sont en appui sur la face interne de la paroi de fond 9c de manière que les tiges filetées fassent saillie de la paroi de fond 9c perpendiculairement à celle-ci. Les tiges filetées 18 sont maintenues solidaires du couvercle 3, 4 par le matériau réfractaire noyant les têtes 19 de ces tiges dans la cuvette.

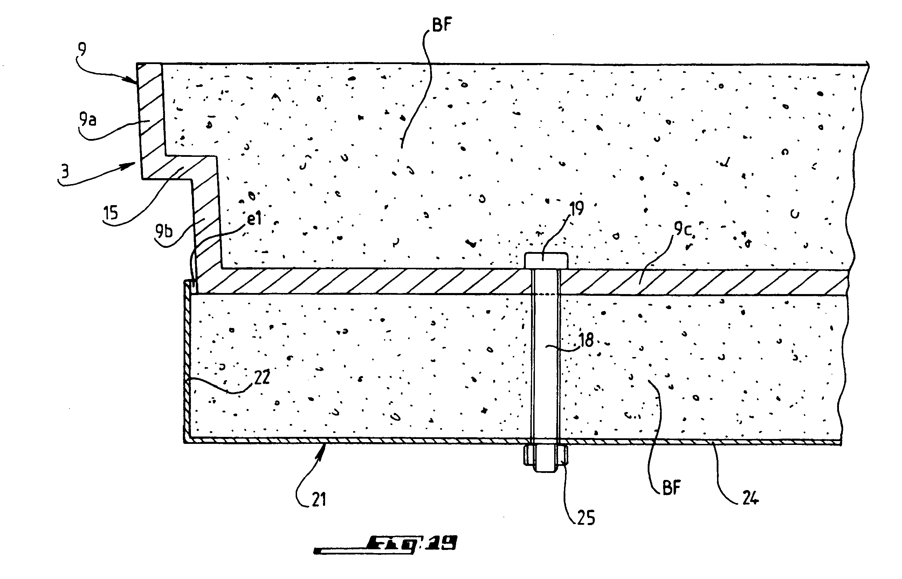

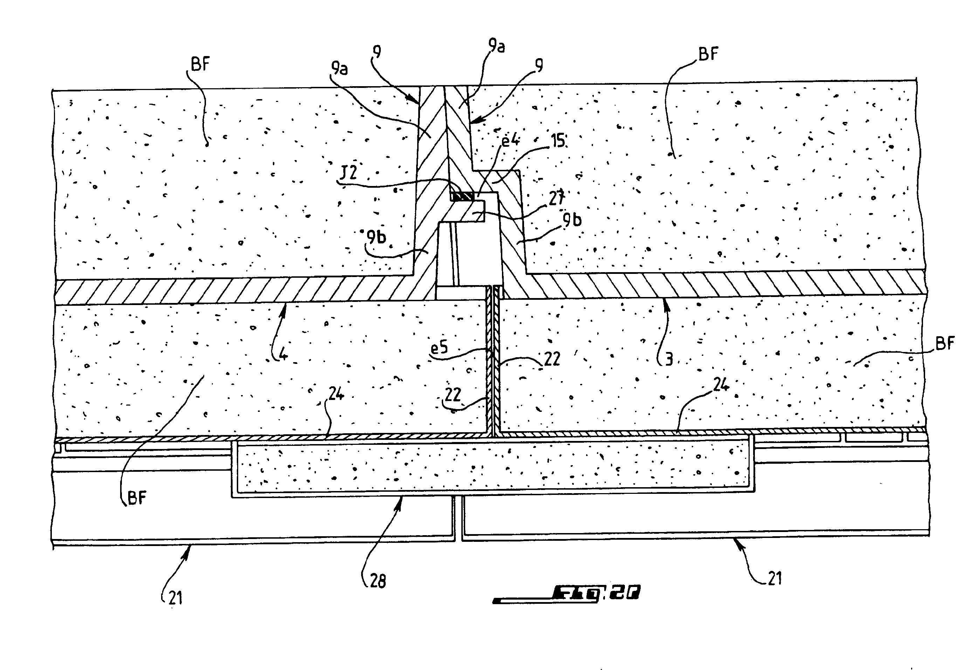

Comme cela ressort mieux de la figure 19, l'ensemble à tiges filetées 18, têtes 19 et écrous 25 permet de fixer amoviblement le carter 21 sous le couvercle correspondant 3, 4 de manière que la paroi de fond 9c de la cuvette de ce couvercle soit en appui sur le matériau réfractaire thermiquement isolant, tel que du béton, remplissant le carter 21. En outre, les parois latérales 22 de ce carter sont espacées par leurs parties supérieures de la partie inférieure 9b des parois périphériques 9 du couvercle 3, 4 suivant un espace périphérique e1 coupant tout pont thermique. Comme représenté en figure 20, le couvercle 4 a l'une de ses parois latérales 9 ne comportant pas de rebord 15, mais un barreau 27 solidaire extérieurement de cette paroi latérale 9 et s'engageant en-dessous du rebord 15 de l'autre couvercle 3 suivant un jeu e4 lorsque ces deux couvercles 3, 4 sont disposés dans le cadre 5 en position côte à côte d'obturation de ce dernier. A cette position, la partie supérieure 9a de la paroi 9 du couvercle 4 est en appui sur la partie supérieure 9a de la paroi latérale 9 du couvercle.

L'équipement de voirie de l'invention constitue un ensemble modulaire évolutif résistant efficacement au feu tout en étant également résistant mécaniquement, et est aisément manoeuvrable pratiquement comme un couvercle habituel pour accéder aux installations techniques logées dans la galerie ou la chambre technique sous jacente.

L'équipement de voirie est agencé de manière à supprimer partiquement tous les ponts thermiques susceptibles de conduire la chaleur dans la chambre souterraine. A titre d'exemple non limitatif, l'équipement de voirie est capable de maintenir pendant deux heures la température interne de la chambre 2 à une valeur inférieure à 100°C pour une température externe d'environ 1100°C.

L'équipement de voirie de l'invention est évolutif, c'est-à-dire que ses performances coupe-feu peuvent être améliorées en remplaçant le carter inférieur du couvercle par un autre carter d'une hauteur supérieure de manière à le remplir d'une plus forte épaisseur de matière réfractaire thermiquement isolante sans changer le couvercle.

## Revendications

1. Equipement de voirie coupe-feu, comprenant un cadre (5), au moins un couvercle ou tampon (3 ; 4) pouvant être amoviblement disposé dans le cadre (5) destiné à être fixé au sol afin de fermer une galerie ou une chambre souterraine technique à protéger des incendies, et au moins un carter (21) complètement rempli d'un matériau réfractaire thermiquement isolant et situé sous le couvercle (3), **caractérisé en ce que** le couvercle (3) est complètement rempli d'un matériau réfractaire thermiquement isolant et le carter (21) est amoviblement fixé sous le couvercle (3) par l'intermédiaire de plusieurs tiges filetées (18) traversant le matériau réfractaire du carter (21) et sa paroi de fond (24), et d'écrous (25) vissés aux tiges filetées (18) sur la paroi de fond (24) du carter (21), les tiges filetées (18) ayant des têtes noyées dans le matériau réfractaire du couvercle (3) pour couper tout pont thermique avec l'extérieur.

2. Equipement de voirie selon la revendication 1, **caractérisé en ce qu'**il comprend au moins un deuxième couvercle (4) complètement rempli d'un matériau réfractaire thermiquement isolant pouvant être disposé en appui dans le cadre (5) en alignement et dans le même plan que le premier couvercle (3) et **en ce qu'**un deuxième carter (21) rempli d'un matériau réfractaire thermiquement isolant est amoviblement fixé sous le deuxième couvercle (4).

3. Equipement de voirie selon la revendication 1 ou 2, **caractérisé en ce que** chaque couvercle (3 ; 4) est en forme de cuvette renversée remplie d'un matériau réfractaire thermiquement isolant et dont la paroi supérieure externe (6) est pourvue de passages traversants (7) également remplis du matériau réfractaire en affleurement avec la face externe de la paroi (6) du couvercle (3 ; 4).

4. Equipement de voirie selon la revendication 3, **caractérisé en ce que** la paroi supérieure externe (6) de la cuvette de chaque couvercle (3 ; 4) est entourée d'une rigole (8) délimitée par des parois externes dressées (9) du couvercle parallèles à des parois latérales ajourées (10) de la cuvette en regard de celles-ci et **en ce que** le matériau réfractaire remplit la rigole périphérique (8) au travers des ajours (10a) des parois latérales (10) de la cuvette.

5. Equipement de voirie selon la revendication 4, **caractérisé en ce que** les parois externes (9) de chaque couvercle (3 ; 4) et la paroi de fond (15) de la rigole périphérique (8) constituant l'assise du couvercle (3 ; 4), peuvent venir en appui par leurs faces externes respectivement sur les faces internes des parois latérales (13) du cadre (5) délimitant son ouverture et un rebord périphérique interne (16) solidaire des parois latérales (13) de ce cadre (5).

6. Equipement de voirie selon la revendication 5, **caractérisé en ce que** chaque couvercle (3 ; 4) comprend des parois périphériques inférieures (17) s'étendant sous la paroi de fond (15) de la rigole périphérique (8) pour délimiter la cuvette renversée du couvercle, ces parois périphériques inférieures (17) étant espacées des parois latérales (13) du cadre (5) lorsque le couvercle (3 ; 4) est disposé en appui dans le cadre (5).

7. Equipement de voirie selon la revendication 6, **caractérisé en ce que** chaque carter (21) contenant le matériau réfractaire thermiquement isolant est amoviblement fixé sous le couvercle correspondant (3 ; 4) de manière que les bords d'extrémités des parois inférieures (17) de la cuvette soient en appui sur le matériau réfractaire du carter (21) et les parties supérieures libres des parois (22) du carter (21) entourent de façon espacée les parois inférieures (17) de la cuvette lorsque le couvercle (3 ; 4) est disposé dans son cadre (5).

8. Equipement de voirie selon l'une des revendications précédentes, **caractérisé en ce que** les tiges filetées (18) sont ancrées par leurs têtes (19) à la paroi (6) du couvercle correspondant (3 ; 4) perpendiculairement sous celle-ci en regard respectivement de passages traversants (7) de la paroi (6) du couvercle (3 ; 4) de manière que les têtes (19) de ces tiges filetées (18) soient noyées dans le matériau réfractaire remplissant ces passages et les tiges filetées (18) soient partiellement noyées dans le matériau réfractaire remplissant la cuvette du couvercle (3 ; 4) en faisant saillie extérieurement de ce matériau à l'opposé de la paroi (6) du couvercle (3 ; 4).

9. Equipement selon la revendication 8, **caractérisé en ce que** la tête (19) de chaque tige filetée (18) est ancrée dans un plot (20) solidaire de la face interne de la paroi (6) du couvercle (3) en regard du passage traversant correspondant (7) de cette paroi.

10. Equipement de voirie selon la revendication 2, **caractérisé en ce que** le deuxième couvercle (4) présente une structure à cuvette renversée remplie de matériau réfractaire thermiquement isolant sensiblement identique à celle du premier couvercle (3), **en ce que** la paroi supérieure externe (6) du deuxième couvercle (4) a l'un de ses bords, non bordé d'une rigole, pouvant être apposé directement en appui sur la paroi externe dressée correspondante (9) du premier couvercle (3) lorsque les deux couvercles (3,4) sont disposés dans le cadre (5) et **en ce que** le deuxième couvercle (4) comprend, sous le bord de sa paroi supérieure (6) en appui sur la paroi externe (9) du premier couvercle (3), un barreau (27) disposé avec jeu (e4) en dessous de la paroi de fond correspondante (15) de la rigole (8) du premier couvercle (3) en étant en regard de façon espacée de la paroi inférieure correspondante (17) de la cuvette du premier couvercle (3).

11. Equipement de voirie selon la revendication 1 ou 2, **caractérisé en ce que** chaque couvercle (3 ; 4) est en forme de cuvette remplie d'un matériau réfractaire thermiquement isolant et comporte un rebord périphérique (15) constituant l'assise du couvercle et délimitant la cuvette du couvercle en deux parties supérieure (9a) et inférieure (9b) respectivement de plus grande et de plus petite sections et **en ce que** le couvercle (3,4) vient en appui par son rebord périphérique (15) sur un rebord périphérique interne (16) solidaire des parois latérales (13) du cadre (5) de manière que les parois latérales (9) de la partie supérieure (9a) de la cuvette soient en appui sur les faces internes des parois latérales (13) du cadre (5) et que les parois latérales (9) de la partie inférieure de la cuvette soient espacées des parois latérales du cadre (5).

12. Equipement selon la revendication 11, **caractérisé en ce que** chaque carter (21) contenant le matériau réfractaire thermiquement isolant est amoviblement fixé sous le couvercle correspondant (3 ; 4) de manière que la paroi de fond (9c) de la cuvette soit en appui sur le matériau réfractaire du carter (21) et les parties supérieures libres des parois (22) du carter (21) entourent de façon espacée la partie inférieure de la cuvette lorsque le couvercle (3 ; 4) est disposé dans son cadre (5).

13. Equipement de voirie selon la revendication 11 ou 12, **caractérisé en ce que** les tiges filetées (18) à têtes (19) traversent la paroi de fond de la cuvette en faisant saillie perpendiculairement sous cette paroi, les têtes (19) de ces tiges étant en appui sur la face interne de la paroi de fond de la cuvette et noyées dans le matériau réfractaire remplissant la cuvette.

14. Equipement selon l'une des revendications 11 à 13, **caractérisé en ce que** le deuxième couvercle (4) a l'une de ses parois latérales (9), ne comportant pas de partie de rebord périphérique (15), ayant sa partie supérieure (9a) pouvant être apposée directement en appui sur la partie supérieure (9a) de la paroi correspondante (9) du premier couvercle (3) lorsque les deux couvercles (3,4) sont disposés dans le cadre (5) et **en ce que** le deuxième couvercle (4) comprend, solidaire de sa paroi latérale, un barreau (27) disposé avec jeu (e4) en dessous du rebord correspondant de la paroi d'appui du premier couvercle (3) en étant en regard de façon espacée de la partie inférieure de cette paroi d'appui.

15. Equipement de voirie selon la revendication 10 ou 14, **caractérisé en ce qu'**un joint expansible à la chaleur (J2) est interposé entre le barreau (27) du deuxième couvercle (4) et la paroi de fond (15) de la rigole (8) du premier couvercle (3) ou le rebord du premier couvercle (3).

16. Equipement de voirie selon la revendication 2, **caractérisé en ce que** le carter (21) à matériau réfractaire fixé sous le deuxième couvercle (4) de façon identique au carter (21) du premier couvercle (3) s'étend dans le même plan que le carter (21) du premier couvercle (3) et a l'une de ses parois latérales (22) en regard de façon espacée de la paroi latérale correspondante (22) du carter (21) du premier couvercle (3) lorsque ces couvercles (3,4) sont disposés dans le cadre (5).

17. Equipement de voirie selon la revendication 16, **caractérisé en ce qu'**une partie formant joint à matériau réfractaire thermiquement isolant (28) est fixée à au moins l'une des parois de fond (24) des carters (21) des deux couvercles (3,4) de manière à recouvrir l'espace (e5) entre les deux parois latérales en vis-à-vis (22) des deux carters (21) au droit de cet espace.

18. Equipement de voirie selon la revendication 17, **caractérisé en ce que** la partie formant joint est constituée par un boîtier parallélépipédique (28) plat recouvrant les deux parois de fond (24) des carters (21) des deux couvercles (3,4) perpendiculairement au plan de l'espace (e5) et contenant le matériau réfractaire constitué par du béton réfractaire ou une ou plusieurs plaques superposées incombustibles thermiquement isolantes à base de silicate de calcium et d'alumine.

19. Equipement de voirie selon l'une des revendications 2 à 18, **caractérisé en ce que** les parois latérales (22) de chaque carter (21) de couvercle (3,4) sont espacées des parois latérales en vis-à-vis (13) du cadre (5) et la paroi de fond (24) de chaque carter de couvercle (21) surplombe un rebord périphérique inférieur (13a) des parois latérales (13) du cadre (5) et un joint périphérique expansible à la chaleur (J1) est interposé entre ce rebord (13a) et la paroi de fond (24) du carter (21).

20. Equipement de voirie selon l'une des revendications précédentes, **caractérisé en ce que** le cadre (5) présente une structure modulaire de longerons (11) et de traverses (12) pouvant être amoviblement assemblés les uns aux autres pour recevoir plusieurs couvercles coupe-feu juxtaposés (3,4).

21. Equipement de voirie selon l'une des revendications précédentes, **caractérisé en ce que** les parois latérales (13) du cadre (5) sont ajourées et un matériau réfractaire thermiquement isolant remplit les ajours (26) de ces parois avant de noyer le cadre (5) dans le sol.

22. Equipement de voirie selon l'une des revendications précédentes, **caractérisé en ce que** le matériau réfractaire remplissant la cuvette de chaque couvercle (3, 4) est du béton coulé dans la cuvette en au moins deux couches pouvant présenter des caractéristiques de résistances à la chaleur et mécanique différentes d'une couche à l'autre et le matériau remplissant les ajours (26) des longerons (11) et traverses (12) du cadre (5) est également du béton coulé dans ces ajours (26).

23. Equipement de voirie selon l'une des revendications précédentes, **caractérisé en ce que** le matériau remplissant chaque carter de couvercle (21) est constitué par du béton ou une ou plusieurs plaques superposées incombustibles thermiquement isolantes à base de silicate de calcium et d'alumine.

24. Equipement de voirie selon la revendication 3, **caractérisé en ce que** les passages traversants (7) sont en forme de trous oblongs répartis sur la majeure partie de la surface de la paroi supérieure (6) de chaque couvercle (3, 4).

25. Equipement de voirie selon l'une des revendications précédentes, **caractérisé en ce que** chaque couvercle (3) est de forme rectangulaire.

26. Equipement de voirie selon l'une des revendications précédentes, **caractérisé en ce que** chaque carter (21) peut être remplacé par un autre carter d'une hauteur différente du précédent et amoviblement fixé sous le couvercle correspondant en étant rempli d'un matériau réfractaire thermiquement isolant.

## Patentansprüche

1. Brandschutzeinrichtung für das Straßennetz, die einen Rahmen (5), mindestens einen Deckel oder Puffer (3; 4) der lösbar in dem Rahmen (5) anordenbar ist, der dazu bestimmt ist, am Boden befestigt zu sein, um eine Galerie oder einen unterirdischen Technikraum zu verschließen, der vor Feuer zu schützen ist, und mindestens ein Gehäuse (21), das vollständig mit einem feuerfesten thermisch isolierendem Material gefüllt ist und sich unter dem Deckel (3) befindet, umfasst, **dadurch gekennzeichnet, dass** der Deckel (3) vollständig mit einem feuerfesten thermisch isolierenden Material gefüllt ist und das Gehäuse (21) mit mehreren Gewindestangen (18), die das feuerfeste Material des Gehäuses (21) und seine Bodenwand (24) durchqueren, und mit Schrauben (25), die mit den Gewindestangen (18) auf der Bodenwand (24) des Gehäuses (21) verschraubt sind, lösbar unter dem Deckel (3)befestigt ist, wobei die Gewindestangen (18) Köpfe haben, die in dem feuerfesten Material des Deckels (3) versenkt sind, um jede thermische Brücke mit der Außenwelt zu unterbrechen.

2. Brandschutzeinrichtung für das Straßennetz nach Anspruch 1, **dadurch gekennzeichnet, dass** sie mindestens einen zweiten Deckel (4) umfasst, der vollständig mit einem feuerfesten thermisch isolierenden Material gefüllt ist, der in Abstützung in dem Rahmen (5) justiert und in derselben Ebene wie der erste Deckel (3) anordenbar ist und dass ein zweites Gehäuse (21), das vollständig mit einem feuerfesten thermisch isolierenden Material gefüllt ist, unter dem zweiten Deckel (4) lösbar befestigt ist.

3. Brandschutzeinrichtung für das Straßennetz nach Anspruch 1 oder 2, **dadurch gekennzeichnet, dass** jeder Deckel (3; 4) die Form einer umgekehrten Schüssel hat, die mit einem feuerfesten thermisch isolierendem Material gefüllt ist und deren äußere obere Wand (6) mit Durchgangspassagen (7) ausgestattet ist, die bündig mit der Außenseite der Wand (6) des Deckels (3; 4) ebenfalls mit feuerfestem Material gefüllt sind.

4. Brandschutzeinrichtung für das Straßennetz nach Anspruch 3, **dadurch gekennzeichnet, dass** die äußere obere Wand (6) der Schüssel jedes Deckels (3; 4) von einer Rille (8) umgeben ist, die von aufgerichteten äußeren Wänden (9) des Deckels umgeben ist, die parallel zu durchbrochenen Seitenwänden (10) der Schüssel gegenüber denselben sind und dass das feuerfeste Material die Umfangsrille (8) durch Durchbrüche (10a) der Seitenwände (10) der Schüssel füllt.

5. Brandschutzeinrichtung für das Straßennetz nach Anspruch 4, **dadurch gekennzeichnet, dass** die äußeren Wände (9) jedes Deckels (3; 4) und die Bodenwand (15) der Umfangsrille (8), die den Sitz des Deckels (3; 4) bilden, durch ihre Außenseiten jeweils auf den Innenseiten der Seitenwände (13) des Rahmens (5), die seine Öffnung begrenzen, und einem inneren Umfangsrand (16), der mit Seitenwänden (13) dieses Rahmens (5) verbunden ist, in Abstützung kommen können.

6. Brandschutzeinrichtung für das Straßennetz nach Anspruch 5, **dadurch gekennzeichnet, dass** jeder Deckel (3; 4) untere Umfangswände (17) umfasst, die sich unter der Bodenwand (15) der Umfangsrille (8) erstrecken, um die umgekehrte Schüssel des Deckels zu begrenzen, wobei diese unteren Umfangswände (17) von den Seitenwänden (13) des Rahmens (5) beabstandet sind, wenn der Deckel (3; 4) in Abstützung in dem Rahmen (5) angeordnet ist.

7. Brandschutzeinrichtung für das Straßennetz nach Anspruch 6, **dadurch gekennzeichnet, dass** jedes Gehäuse (21), das das feuerfeste thermisch isolierende Material enthält, unter dem entsprechenden Deckel (3; 4) derart lösbar befestigt ist, dass die Endränder der unteren Wände (17) der Schüssel in Abstützung auf dem feuerfestem Material des Gehäuses (21) sind und die freien oberen Teile der Wände (22) des Gehäuses (21) die unteren Wände (17) der Schüssel beabstandet umgeben, wenn der Deckel (3; 4) in seinem Rahmen (5) angeordnet ist.

8. Brandschutzeinrichtung für das Straßennetz nach einem der vorangehenden Ansprüche, **dadurch gekennzeichnet, dass** die Gewindestangen (18) mit ihren Köpfen (19) in der Wand (6) des entsprechenden Deckels (3; 4) lotrecht unter dieser jeweils gegenüber Durchgangspassagen (7) der Wand (6) des Deckels (3; 4) derart verankert sind, dass die Köpfe (19) dieser Gewindestangen (18) in dem feuerfesten Material versenkt sind, das diese Passagen füllt, und die Gewindestangen (18) teilweise in dem feuerfesten Material versenkt sind, das die Schüssel des Deckels (3; 4) füllt, wobei sie gegenüber der Wand (6) des Deckels (3; 4) außen aus diesen Material hervorstehen.

9. Einrichtung nach Anspruch 8, **dadurch gekennzeichnet, dass** der Kopf (19) jeder Gewindestange (18) in einem Klötzchen (20) verankert ist, das mit der Innenseite der Wand (6) des Deckels (3) gegenüber der entsprechenden Durchgangspassage (7) dieser Wand verbunden ist.

10. Brandschutzeinrichtung für das Straßennetz nach Anspruch 2, **dadurch gekennzeichnet, dass** der zweite Deckel (4) die Struktur einer umgekehrten Schüssel aufweist, die mit feuerfestem thermisch isolierenden Material gefüllt ist, die mit derjenigen des ersten Deckels (3) etwa identisch ist, und dass die äußere obere Wand (6) des zweiten Deckels (4) einen ihrer Ränder hat, der nicht von einer Rille gesäumt ist, der direkt auf der entsprechenden aufgerichteten äußeren Wand (9) des ersten Deckels (3) auflegbar ist, wenn die zwei Deckel (3, 4) in dem Rahmen (5) angeordnet sind und dass der zweite Deckel (4) unter dem Rand seiner oberen Wand (6) in Abstützung auf der äußeren Wand (9) des ersten Deckels (3) einen Stab (27) umfasst, der mit Spiel (e4) unter der entsprechenden Bodenwand (15) der Rille (8) des ersten Deckels (3) angeordnet ist, wobei er dabei der entsprechenden unteren Wand (17) der Schüssel des ersten Deckels (3) beabstandet gegenüberliegt.

11. Brandschutzeinrichtung für das Straßennetz nach Anspruch 1 oder 2, **dadurch gekennzeichnet, dass** jeder Deckel (3; 4) in Schüsselform gefüllt mit einem feuerfesten thermisch isolierenden Material ist und einen Umfangsrand (15) aufweist, der den Sitz des Deckels bildet und die Schüssel des Deckels in zwei Teile, einen oberen (9a) und einen unteren (9b) jeweils größeren und kleineren Querschnitts trennt und dass sich der Deckel (3,4) mit seinem Umfangsrand (15) auf einem inneren Umfangsrand (16), der mit den Seitenwänden (13) des Rahmens (5) verbunden ist, derart abstützt, dass sich die Seitenwände (9) des oberen Teils (9a) der Schüssel auf den Innenseiten der Seitenwände (13) des Rahmens (5) abstützen und dass die Seitenwände (9) des unteren Teils der Schüssel von den Seitenwänden des Rahmens (5) beabstandet sind.

12. Einrichtung nach Anspruch 11, **dadurch gekennzeichnet, dass** jedes Gehäuse (21), das das feuerfeste thermisch isolierende Material enthält, lösbar unter dem entsprechenden Deckel (3; 4) derart befestigt ist, dass sich die Bodenwand (9c) der Schüssel auf dem feuerfesten Material des Gehäuses (21) abstützt und die freien oberen Teile der Wände (22) des Gehäuses (21) den unteren Teil der Schüssel beabstandet umgeben, wenn der Deckel (3; 4) in seinem Rahmen (5) angeordnet ist.

13. Brandschutzeinrichtung für das Straßennetz nach Anspruch 11 oder 12, **dadurch gekennzeichnet, dass** die Gewindestangen (18) mit Köpfen (19) die Bodenwand der Schüssel durchqueren, indem sie lotrecht unter dieser Wand herausragen, wobei sich die Köpfe (19) dieser Stangen auf der Innenseite der Bodenwand der Schüssel abstützen und in dem feuerfesten Material eingelassen sind, dass die Schüssel füllt.

14. Einrichtung nach einem der Ansprüche 11 bis 13, **dadurch gekennzeichnet, dass** der zweite Deckel (4) eine seiner Seitenwände (9) hat, die keinen Umfangsrandteil (15) aufweist, ihren oberen Teil (9a) hat, der direkt auf dem oberen Teil (9a) der entsprechenden Wand (9) des ersten Deckels (3) abstützbar ist, wenn die zwei Deckel (3, 4) in dem Rahmen (5) angeordnet sind, und dass der zweite Deckel (4) verbunden mit seiner Seitenwand einen Stab (27) umfasst, der mit Spiel (e4) unter dem entsprechenden Rand der Stützwand des ersten Deckels (3) angeordnet ist, wobei er dabei dem unteren Teil dieser Stützwand beabstandet gegenüberliegt.

15. Brandschutzeinrichtung für das Straßennetz nach Anspruch 10 oder 14, **dadurch gekennzeichnet, dass** eine wärmedehnbare Dichtung (J2) zwischen dem Stab (27) des zweiten Deckels (4) und der Bodenwand (15) der Rille (8) des ersten Deckels (3) oder dem Rand des ersten Deckels (3) zwischengestellt ist.

16. Brandschutzeinrichtung für das Straßennetz nach Anspruch 2, **dadurch gekennzeichnet, dass** das Gehäuse (21) mit feuerfestem Material, das unter dem zweiten Deckel (4) identisch am Gehäuse (21) des ersten Deckels (3) befestigt ist, sich in derselben Ebene wie das Gehäuse (21) des ersten Deckel (3) erstreckt und eine seiner Seitenwände (22) beabstandet von der entsprechenden Seitenwand (22) des Gehäuses (21) des ersten Deckels (3) gegenüber hat, wenn diese Deckel (3, 4) in dem Rahmen (5) angeordnet sind.

17. Brandschutzeinrichtung für das Straßennetz nach Anspruch 16, **dadurch gekennzeichnet, dass** ein dichtungsbildender Teil mit feuerfestem, thermisch isolierenden Material (28) an mindestens einer der Bodenwände (24) der Gehäuse (21) der zwei Deckel (3, 4) derart befestigt ist, dass der Raum (e5) zwischen den zwei gegenüberliegenden Seitenwänden (22) der zwei Gehäuse (21) neben diesem Raum abgedeckt ist.

18. Brandschutzeinrichtung für das Straßennetz nach Anspruch 17, **dadurch gekennzeichnet, dass** der dichtungsbildende Teil von einem flachen parallelepipedischen Kasten (28) gebildet wird, der die zwei Bodenwände (24) der Gehäuse (21) der zwei Deckel (3, 4) lotrecht zur Ebene des Raums (e5) abdeckt und das feuerfeste Material enthält, das von feuerfestem Beton gebildet wird oder einer oder mehreren übereinanderliegenden thermisch isolierenden unbrennbaren Platten auf der Basis von Kalziumsilikat und von Tonerde.

19. Brandschutzeinrichtung für das Straßennetz nach einem der Ansprüche 2 bis 18, **dadurch gekennzeichnet, dass** die Seitenwände (22) jedes Gehäuse (21) eines Deckels (3, 4) von den gegenüberliegenden Seitenwänden (13) des Rahmens (5) beabstandet sind und die Bodenwand (24) jedes Gehäusedeckels (21) über einen unteren Umfangsrand (13a) der Seitenwände (13) des Rahmens (5) übersteht und eine wärmedehnbare Umfangsdichtung (J1) zwischen diesem Rand (13a) und der Bodenwand (24) des Gehäuses (21) zwischengestellt ist.

20. Brandschutzeinrichtung für das Straßennetz nach einem der vorangehenden Ansprüche, **dadurch gekennzeichnet, dass** der Rahmen (5) eine modulare Struktur aus Längsträgern (11) und Querträgern (12) aufweist, die lösbar aneinander montierbar sind, um mehrere nebeneinanderliegende Brandschutzdeckel (3, 4) aufzunehmen.

21. Brandschutzeinrichtung für das Straßennetz nach einem der vorangehenden Ansprüche, **dadurch gekennzeichnet, dass** die Seitenwände (13) des Rahmens (5) durchbrochen sind und ein feuerfestes thermisch isolierendes Material die Durchbrüche (26) dieser Wände füllt, bevor der Rahmen (5) in den Boden eingelassen wird.

22. Brandschutzeinrichtung für das Straßennetz nach einem der vorangehenden Ansprüche, **dadurch gekennzeichnet, dass** das feuerfeste Material, das die Schüssel jedes Deckels (3, 4) füllt, Beton ist, der in die Schüssel in mindestens zwei Schichten gegossen ist, die mechanische und wärmefeste Eigenschaften aufweisen können, die von einer Schicht zur anderen unterschiedlich sind, und das Material, das die Durchbrüche (26) der Längsträger (11) und Querträger (12) des Rahmens (5) füllt, ebenfalls Beton ist, der in diese Durchbrüche (26) gegossen ist.

23. Brandschutzeinrichtung für das Straßennetz nach einem der vorangehenden Ansprüche, **dadurch gekennzeichnet, dass** das Material, das jedes Deckelgehäuse (21) füllt, von Beton oder einer oder mehreren übereinanderliegenden unbrennbaren thermisch isolierenden Schichten auf der Basis von Kalziumsilikat und von Tonerde gebildet wird.

24. Brandschutzeinrichtung für das Straßennetz nach Anspruch 3, **dadurch gekennzeichnet, dass** die Durchgangspassagen (7) in Form länglicher Löcher sind, die über den größten Teil der Fläche der oberen Wand (6) jedes Deckels (3, 4) verteilt sind.

25. Brandschutzeinrichtung für das Straßennetz nach einem der vorangehenden Ansprüche, **dadurch gekennzeichnet, dass** jeder Deckel (3) rechteckig ist.

26. Brandschutzeinrichtung für das Straßennetz nach einem der vorangehenden Ansprüche, **dadurch gekennzeichnet, dass** jedes Gehäuse (21) von einem anderen Gehäuse einer Höhe ersetzbar ist, die sich von der des vorhergehenden unterscheidet und lösbar unter dem entsprechenden Deckel befestigt ist, wobei es mit einen feuerfesten thermisch isolierenden Material gefüllt ist.

## Claims

1. Firebreak road system equipment, comprising a frame (5), at least one cover or lid (3; 4) that can be removably positioned in the frame (5) designed to be fastened to the ground so as to close a gallery or an underground technical room to be protected from fires, and at least one casing (21) completely filled with a thermally insulating refractory material and situated below the cover (3), **characterized in that** the cover (3) is completely filled with a thermally insulating refractory material and the casing (21) is removably fastened below the cover (3) by several threaded rods (18) passing through the refractory material of the casing (21) and its bottom wall (24), and nuts (25) screwed to the threaded rods (18) on the bottom wall (24) of the casing (21), the threaded rods (18) having heads embedded in the refractory material of the cover (3) to cut any thermal bridge with the outside.

2. The road system equipment according to claim 1, **characterized in that** it comprises at least one second cover (4) completely filled with a thermally insulating refractory material that can be positioned bearing in the frame (5) aligned with and in the same plane as the first cover (3), and **in that** a second casing (21) filled with a thermally insulating refractory material is removably fastened below the second cover (4).

3. The road system equipment according to claim 1 or 2, **characterized in that** each cover (3; 4) is in the shape of an upside down bowl filled with a thermally insulating refractory material and whereof the outer upper wall (6) is provided with through passages (7) also filled with the refractory material flush with the outer face of the wall (6) of the cover (3; 4).

4. The road system equipment according to claim 3, **characterized in that** the outer upper wall (6) of the bowl of each cover (3; 4) is surrounded by a gutter (8) delimited by upright outer walls (9) of the cover parallel to openwork side walls (10) of the bowl across from the latter, and **in that** the refractory material fills the peripheral gutter (8) through the openings (10a) of the side walls (10) of the bowl.

5. The road system equipment according to claim 4, **characterized in that** the outer walls (9) of each cover (3; 4) and the bottom wall (15) of the peripheral gutter (8) making up the base of the cover (3; 4) can bear, by their outer faces, on the inner faces of the side walls (13) of the frame (5) delimiting its opening and on an inner peripheral rim (16) secured to the side walls (13) of that frame (5), respectively.

6. The road system equipment according to claim 5, **characterized in that** each cover (3; 4) comprises lower peripheral walls (17) extending below the bottom wall (15) of the peripheral gutter (8) to delimit the upside down bowl of the cover, said lower peripheral walls (17) being spaced apart from the side walls (13) of the frame (5) when the cover (3; 4) is positioned bearing in the frame (5).

7. The road system equipment according to claim 6, **characterized in that** each casing (12) containing the thermally insulating refractory material is removably fastened below the corresponding cover (3; 4) such that the end edges of the lower walls (17) of the bowl bear on the refractory material of the casing (21) and the free upper parts of the walls (22) of the casing (21) surround, in a spaced manner, the lower walls (17) of the bowl when the cover (3; 4) is positioned in its frame (5).

8. The road system equipment according to one of the preceding claims, **characterized in that** the threaded rods (18) are anchored by their heads (19) to the wall (6) of the corresponding cover (3; 4) perpendicular below the latter across from through passages (7) of the wall (6) of the cover (3; 4), respectively, such that the heads (19) of said threaded rods (18) are embedded in the refractory material filling said passages and the threaded rods (18) are partially embedded in the refractory material filling the bowl of the cover (3; 4) while protruding toward the outside of said material opposite the wall (6) of the cover (3; 4) .

9. The equipment according to claim 8, **characterized in that** the head (19) of each threaded rod (18) is anchored in a stud (20) secured to the inner face of the wall (6) of the cover (3) across from the corresponding through passage (7) of that wall.

10. The road system equipment according to claim 2, **characterized in that** the second cover (4) has an upside down bowl structure filled with a thermally insulating refractory material substantially identical to that of the first cover (3), **in that** one edge the outer upper wall (6) of the second cover (4) not bordered by a gutter can be affixed bearing directly on the corresponding upright outer wall (9) of the first cover (3) when the two covers (3; 4) are positioned in the frame (5), and **in that** the second cover (4) comprises, below the edge of its upper wall (6) bearing on the outer wall (9) of the first cover (3), a strip (27) positioned with play (e4) below the corresponding bottom wall (15) of the gutter (8) of the first cover (3) while being across, in a spaced manner, from the corresponding lower wall (17) of the bowl of the first cover (3).

11. The road system equipment according to claim 1 or 2, **characterized in that** each cover (3; 4) is in the shape of a bowl filled with a thermally insulating refractory material and includes a peripheral rim (15) making up the base of the cover and delimiting the bowl of the cover in two upper (9a) and lower (9b) parts with larger and smaller sections, respectively, and **in that** the cover (3, 4) bears by its peripheral rim (15) on an inner peripheral rim (16) secured to the side walls (13) of the frame (5) such that the side walls (9) of the upper part (9a) of the bowl bear on the inner faces of the side walls (13) of the frame (5) and the side walls (9) of the lower part of the bowl are spaced away from the side walls of the frame (5).

12. The equipment according to claim 11, **characterized in that** each casing (21) containing the thermally insulating refractory material is removably fastened below the corresponding cover (3; 4) such that the bottom wall (9c) of the bowl bears on the refractory material of the casing (21) and the free upper parts of the walls (22) of the casing (21) surround, in a spaced manner, the lower part of the bowl when the cover (3; 4) is positioned in its frame (5).

13. The road system equipment according to claim 11 or 12, **characterized in that** the threaded rods (18) with heads (19) pass through the bottom wall of the bowl while protruding perpendicularly below said wall, the heads (19) of said rods bearing on the inner face of the bottom wall of the bowl and being embedded in the refractory material filling the bowl.

14. The equipment according to one of claims 11 to 13, **characterized in that** the upper part (9a) of one of the side walls (9) of the second cover (4), said side wall not including a peripheral rim part (15), can be affixed directly bearing on the upper part (9a) of the corresponding wall (9) of the first cover (3) when the two covers (3, 4) are positioned in the frame (5), and **in that** the second cover (4) comprises, secured to its side wall, a strip (27) positioned with play (e4) below the corresponding rim of the bearing wall of the first cover (3) while being across, in a spaced manner, from the lower part of that bearing wall.

15. The road system equipment according to claim 10 or 14, **characterized in that** a heat-expanding seal (J2) is interposed between the strip (27) of the second cover (4) and the bottom wall (15) of the gutter (8) of the first cover (3) or the rim of the first cover (3).

16. The road system equipment according to claim 2, **characterized in that** the refractory material casing (21) fastened below the second cover (4) identically to the casing (21) of the first cover (3) extends in the same plane as the casing (21) of the first cover (3) and has one of its side walls (22) across, in a spaced manner, from the corresponding side wall (22) of the casing (21) of the first cover (3) when said covers (3, 4) are positioned in the frame (5).

17. The road system equipment according to claim 16, **characterized in that** a part forming a seal (28) made from a thermally insulating refractory material is fastened to at least one of the bottom walls (24) of the casings (21) of the two covers (3, 4) so as to cover the space (e5) between the two opposite side walls (22) of the two casings (21) at that space.

18. The road system equipment according to claim 17, **characterized in that** the seal-forming part is made up of a flat parallelepiped housing (28) covering the two bottom walls (24) of the casings (21) of the two covers (3, 4) perpendicular to the plane of the space (e5) and containing the refractory material made up of refractory concrete or one or more calcium silicate- and alumina-based thermally insulating incombustible superimposed plates.

19. The road system equipment according to one of claims 2 to 18, **characterized in that** the side walls (22) of each cover (3, 4) casing (21) are spaced apart from the opposite side walls (13) of the frame (5) and the bottom wall (24) of each cover casing (21) overhangs a lower peripheral rim (13a) of the side walls (13) of the frame (5) and a heat expandable peripheral seal (J1) is interposed between said rim (13a) and the bottom wall (24) of the casing (21).

20. The road system equipment according to one of the preceding claims, **characterized in that** the frame (5) has a modular structure of beams (11) and crosspieces (12) that can be removably assembled to each other to receive several juxtaposed firebreak covers (3, 4).

21. The road system equipment according to one of the preceding claims, **characterized in that** the side walls (13) of the frame (5) are open-worked and a thermally insulating refractory material fills the openings (26) of those walls before embedding the frame (5) in the ground.

22. The road system equipment according to one of the preceding claims, **characterized in that** the refractory material filling the bowl of each cover (3, 4) is concrete poured into the bowl in at least two layers that may have different heat and mechanical strengths from one layer to the other and the material filling the openings (26) of the beams (11) and crosspieces (12) of the frame (5) is also concrete poured into those openings (26).

23. The road system equipment according to one of the preceding claims, **characterized in that** the material filling each cover casing (21) is made up of concrete or one or more calcium silicate- and alumina-based thermally insulating incombustible superimposed plates.

24. The road system equipment according to claim 3, **characterized in that** the through passages (7) are in the form of oblong holes distributed over the majority of the surface of the upper wall (6) of each cover (3, 4).

25. The road system equipment according to one of the preceding claims, **characterized in that** each cover (3) is rectangular.

26. The road system equipment according to one of the preceding claims, **characterized in that** each casing (21) can be replaced by another casing with a different height from the previous one and removably fastened below the corresponding cover while being filled with a thermally insulating refractory material.
